# EUROPÄISCHE PATENTSCHRIFT

(11) **EP 3 069 055 B1**
(45) Veröffentlichungstag und Bekanntmachung des Hinweises auf die Patenterteilung: **05.06.2019**
(21) Anmeldenummer: 14786930.9
(22) Anmeldetag: 22.10.2014
(51) Int. Cl.: F16J 15/16, F16J 15/34, F16J 15/48

(54) **DICHTUNGSANORDNUNG**
SEALING ARRANGEMENT
SYSTÈME D'ÉTANCHÉITÉ

(30) Priorität: 13.11.2013 DE 102013112465
(43) Veröffentlichungstag der Anmeldung: 21.09.2016
(73) Patentinhaber: ElringKlinger AG, 72581 Dettingen (DE)
(72) Erfinder: KOCH, Uwe, 72124 Pliezhausen (DE)
(74) Vertreter: Hoeger, Stellrecht & Partner Patentanwälte mbB
(86) Internationale Anmeldenummer: PCT/EP2014/072618
(87) Internationale Veröffentlichungsnummer: WO 2015/071060

(56) Entgegenhaltungen:
- EP-A1- 0 386 315
- WO-A1-2010/130969
- WO-A2-2011/092111
- DE-A1- 4 209 043
- DE-A1- 4 209 043
- DE-A1- 10 259 400
- DE-A1-102011 077 015
- DE-U1-202006 018 075
- FR-A1- 2 454 569
- US-A- 3 256 027

## Beschreibung

Die vorliegende Erfindung betrifft eine Dichtungsanordnung zur Abdichtung zwischen einem ersten und einem zweiten Medium im Bereich einer Welle, umfassend ein Dichtungselement aus einem Kunststoffmaterial, wobei ein Abschnitt des Dichtungselements mit einer Anpresskraft an der Welle oder an einer zur Welle senkrechten Gegenfläche anliegt.

Derartige Dichtungsanordnungen werden als Radialwellendichtung bzw. als Axialwellendichtung bezeichnet, je nachdem, ob das Dichtungselement an der Welle oder an einer senkrechten Gegenfläche anliegt. Sie werden in verschiedenen technischen Bereichen eingesetzt, um bei einer rotierenden Welle, die durch ein statisches Bauteil hindurchtritt, einen unerwünschten Austritt bzw. Übertritt der verschiedenen Medien von der einen auf die andere Seite zu verhindern. Je nach Anwendungsfall handelt es sich bei den abzudichtenden Medien um Flüssigkeiten (z.B. Schmiermittel) und/oder um Gase (z.B. Umgebungsluft, Brenngase oder Abgas). Die verwendeten Dichtungselemente müssen sowohl chemisch, thermisch als auch mechanisch ausreichend widerstandsfähig sein, um eine hohe Dichtigkeit und lange Lebensdauer der Dichtungsanordnungen gewährleisten zu können.

Besonders hohe Anforderungen müssen insbesondere dann erfüllt werden, wenn auf beiden Seiten des Dichtungselements unterschiedliche Druckverhältnisse herrschen, d.h. wenn eine Abdichtung zwischen einer Hochdruckseite und einer Niederdruckseite erfolgen muss. Dies ist häufig bei Radial- oder Axialwellendichtungen in Turbinen, Motoren und Getrieben der Fall. Da sich die Druckdifferenz während des Betriebs ändern kann, sind verschiedene Maßnahmen bekannt, um die Anpresskraft des Dichtungselements an die Welle bzw. an die Gegenfläche mit steigender Druckdifferenz zu erhöhen, um so einer durch das Hochdruckmedium verursachten Undichtigkeit entgegenzuwirken. Im einfachsten Fall kann bei einer Radialwellendichtung ein Dichtring eingesetzt werden, der in Richtung der Hochdruckseite vorgewölbt ist, so dass der Dichtring unmittelbar durch den Druck des Mediums an die Welle gepresst wird.

Nachteilig ist bei solchen Dichtungsanordnungen, dass mit der steigenden Anpresskraft bei entsprechenden Druckverhältnissen naturgemäß auch die Reibung des Dichtungselements an der Welle bzw. Gegenfläche zunimmt, was zu einem erhöhten Verschleiß führen kann, wobei zu berücksichtigen ist, dass sich die druckbedingte Anpresskraft jeweils zu der initialen Anpresskraft addiert, die zur Abdichtung im Zustand ohne Druckdifferenz erforderlich ist. Besonders problematisch ist die Situation bei Anwendungen mit sehr hohen Drehzahlen (z.B. Zentrifugen, Turbolader usw.), wo die Kombination von hoher Reibung und hoher Drehzahl zu einem starken Temperaturanstieg führt, der zu einer thermischen Schädigung sowohl des Dichtungselements (z.B. Materialversprödung) als auch der beteiligten Medien (z.B. Verkohlung von Öl) führen kann. Insofern wäre die Möglichkeit wünschenswert, die Anpresskraft des Dichtungselements an die Welle bzw. Gegenfläche mit steigender Wellendrehzahl zu reduzieren, und zwar unabhängig von der Frage, ob eine Druckdifferenz zwischen dem ersten und dem zweiten Medium vorliegt. Bei den aus dem Stand der Technik bekannten Dichtungsanordnungen ist diese Möglichkeit bisher nicht gegeben.

Andererseits gibt es auch Dichtungsanordnungen bzw. Situationen, in denen der gegenteilige Effekt wünschenswert ist, nämlich eine Erhöhung der Anpresskraft des Dichtungselements, vorzugsweise auch in diesem Fall bei steigender Drehzahl der Welle. Dies kann insbesondere dann der Fall sein, wenn das Dichtungselement ebenfalls rotiert und bei hohen Drehzahlen die Fliehkraft der Anpresskraft entgegenwirkt.

Die DE 42 09 043 A1 offenbart eine Wellendichtung, die sich durch lange Standzeit auszeichnet. Sie weist einen einen Gehäusedurchgang verschließenden Dichtring und einen diesem gehäuseaußenseitig auf der Welle sitzenden Abdeckring auf, der einen mit einem sich in Richtung auf den Dichtring erstreckenden Außenkragen ausgestatteten Außenflansch aufweist. An einem geschlossenen Oberflächenteil des Abdeckring-Außenkragens liegt eine stirnseitige Abdichtlippe des Dichtringes an, und der Abdeckring ist mit Staub- und Schmutzpartikel von der Dichtkante des Dichtringes fernhaltenden Durchbrüchen ausgestattet.

Der Erfindung liegt daher allgemein die Aufgabe zugrunde, eine flexible Möglichkeit für die Regulierung der Anpresskraft eines gegebenen Dichtungselements in einer Dichtungsanordnung zu schaffen.

Diese Aufgabe wird bei einer Dichtungsanordnung gemäß Anspruch 1 gelöst.

Durch die gezielte Druckänderung in dem ersten Medium kommt es - bei gleichzeitig unverändertem Druck in dem zweiten Medium - zu einer entsprechenden Druckdifferenz zwischen den beiden Seiten des Dichtungselements, was je nach Richtung des Druckgefälles zu einer Verringerung oder Erhöhung der Anpresskraft führt. Dabei ist im Rahmen der Erfindung immer das Medium, in dem die Druckänderung bewirkt wird, definitionsgemäß das erste Medium, unabhängig davon, welches der Medien flüssig oder gasförmig ist und welches Medium generell einen höheren Druck aufweist.

Die zur Druckänderung eingesetzten Mittel können im Rahmen der Erfindung sehr unterschiedliche Vorrichtungen umfassen.

Ein wesentlicher Aspekt der Erfindung betrifft den Fall, dass die Mittel dafür ausgelegt sind, lediglich lokal im Bereich des Dichtungselements eine gezielte Druckänderung zu bewirken. Für den gewünschten Effekt, d.h. die Beeinflussung der Anpresskraft, ist eine solche lokale Druckänderung in der Regel ausreichend. Zudem kann es in einigen Fällen unmöglich oder für das Gesamtsystem nachteilig sein, eine Druckänderung in dem gesamten ersten Medium zu bewirken.

Das Ausmaß und die zeitliche Steuerung der Druckänderung sind bei der vorliegenden Erfindung im Prinzip frei wählbar, so dass eine sehr flexible Regulierung der Anpresskraft des Dichtungselements in Abhängigkeit von den jeweiligen Betriebsbedingungen möglich ist. Besonders vorteilhaft ist es jedoch in vielen Fällen, wenn die Druckänderung von der Rotationsgeschwindigkeit der Welle abhängig ist. Durch eine Kopplung der Anpresskraftänderung an die Rotationsgeschwindigkeit kann den beiden oben beschriebenen Problemen entgegengewirkt werden, nämlich entweder einer zu hohen Reibung bei hohen Drehzahlen oder einer unerwünschten Verringerung der Anpresskraft durch Fliehkräfte.

Besonders günstig ist es, wenn die Erhöhung der Rotationsgeschwindigkeit automatisch die Druckänderung bewirkt, da in diesem Fall die Notwendigkeit einer externen Steuerung entfällt. Gemäß der Erfindung umfassen die Mittel zu Druckänderung daher einen drehfest mit der Welle verbundenen Strömungserzeuger, der so ausgebildet ist, dass er eine mit der Rotationsgeschwindigkeit der Welle zunehmende Strömung in dem ersten Medium verursacht, wobei die Strömung eine Verringerung der Anpresskraft des Dichtungselements auf die senkrechte Gegenfläche bewirkt.

Bei der Erfindung liegt somit eine lokale Druckänderung im Bereich des Dichtungselements vor, welche drehzahlabhängig von der Strömung verursacht wird.

Je nach Gestaltung der Dichtungsanordnung kann die Verringerung der Anpresskraft durch den Strömungserzeuger mittels verschiedener Anordnungen realisiert werden, die im Folgenden noch näher beschrieben werden. Das Funktionsprinzip dieser Ausführungsform der Erfindung kommt bei Axialwellendichtungen zur Anwendung, wenn die von dem Strömungserzeuger verursachte Strömung im Wesentlichen parallel zu der Welle orientiert ist. Dementsprechend ist dabei der Strömungserzeuger in Axialrichtung vor oder hinter dem Dichtungselement angeordnet.

Bei vielen Anwendungsfällen, z.B. Zentrifugen oder Turboladern, kann durch eine drehzahlabhängige Verringerung der Anpresskraft die Wärmeentwicklung durch die Reibung des Dichtungselements an der Welle bzw. Gegenfläche deutlich reduziert werden kann. Dadurch wird die thermische Belastung des Dichtungselements und der beteiligten Medien reduziert, die Lebensdauer der Dichtungsanordnung verlängert und einem vorzeitigem Versagen der Dichtung vorgebeugt. Dies gilt prinzipiell unabhängig von den Druckverhältnissen zwischen den beiden Medien, aber ganz besonders bei einer zusätzlichen hohen Druckbeaufschlagung des Dichtungselements. Die Verringerung der Anpresskraft mit steigender Drehzahl ermöglicht es außerdem, die initiale Anpresskraft ausreichend hoch einzustellen, um eine Dichtigkeit auch bei stehender Welle zu gewährleisten.

Die Erfindung begrenzt aber nicht nur den Temperaturanstieg durch eine Reduktion der entstehenden Reibungswärme, sondern trägt auch zu einer aktiven Kühlung im Bereich des Dichtungselements bei, da durch die verursachte Strömung eine permanente Durchmischung des im Bereich des anliegenden Dichtungselements erhitzten ersten Mediums stattfindet.

Des Weiteren kann die Strömung des ersten Mediums auch zu einem Reinigungseffekt führen, indem Verunreinigungen (z.B. Staub oder Schmutzpartikel), die sich an dem Dichtungselement absetzen, weggespült werden.

Als weiterer Vorteil kann die Strömung dazu dienen, unter dem Dichtungselement hindurchtretendes Leckagefluid zurückzudrängen, wenn das erste Medium gasförmig und das zweite Medium flüssig ist.

Die vorstehend beschriebenen Effekte, die durch die Strömung als solche bewirkt werden, gelten in gleicher Weise für den umgekehrten Fall, dass die Anpresskraft des Dichtungselements mit zunehmender Rotationsgeschwindigkeit erhöht werden soll. Auch wenn in der folgenden Beschreibung der konkreten Ausgestaltung des Strömungserzeugers der Einfachheit halber meist nur von einer Verringerung der Anpresskraft die Rede ist, versteht es sich von selbst, dass der gegenteilige Effekt jeweils durch eine Umkehrung der Strömungsrichtung realisiert werden kann.

Bei dem ersten Medium, in dem die Strömung erzeugt wird, kann es sich im Rahmen der Erfindung sowohl um ein flüssiges Medium (z.B. ein Schmiermittel wie Motor- oder Getriebeöl) als auch um ein gasförmiges Medium (z.B. Umgebungsluft oder Heißgas) handeln. Dasselbe gilt auch für das zweite Medium. Ebenso kann im Rahmen der Erfindung das erste Medium oder das zweite Medium einen höheren Druck aufweisen. Im Fall von zwei unterschiedlichen Medien hängt es von den jeweiligen Rahmenbedingungen ab, auf welcher Seite des Dichtungselements die Anordnung des Strömungserzeugers vorteilhafter ist.

Gemäß der Erfindung umfasst der Strömungserzeuger ein konzentrisch um die Welle angeordnetes Laufrad, welches insbesondere als Propeller, Flügelrad, Schaufelrad oder Fächerscheibe ausgebildet ist. Die genannten Gestaltungen haben im Wesentlichen dieselbe Wirkungsweise, nämlich die Erzeugung einer axialen Strömung durch eine Mehrzahl von sich radial von der Welle weg erstreckenden Elementen, die gegenüber einer zur Welle senkrechten Ebene geneigt und/oder gekrümmt sind. Die Verwendung eines Laufrades als Strömungserzeuger ist eine Maßnahme, die relativ einfach und kostengünstig realisiert werden kann. Außerdem arbeitet ein Laufrad im Wesentlichen verschleißfrei.

Das Laufrad kann aus Metall oder aus einem Kunststoffmaterial hergestellt sein.

Das Laufrad kann als separates Bauteil auf die Welle aufgeschoben werden oder auch einstückig mit dieser hergestellt sein.

Die konkrete Ausgestaltung des Laufrades, insbesondere dessen Größe in Bezug auf das Dichtungselement sowie die Anzahl und der Neigungswinkel der Flügel bzw. Schaufeln, kann in Abhängigkeit von den jeweiligen Rahmenbedingungen ausgewählt und optimiert werden, um die jeweils gewünschte drehzahlabhängige Verringerung der Anpresskraft zu erreichen. Bei der Gestaltung des Laufrades spielt v.a. auch die Viskosität des ersten Mediums, in dem die Strömung erzeugt werden soll, eine wichtige Rolle, also insbesondere ob es sich um ein Gas oder eine Flüssigkeit handelt.

Der Strömungserzeuger umfasst ein Gehäuse, welches das Laufrad entlang dessen Umfang umgibt. Dieses kann ebenfalls aus Metall oder aus Kunststoff gebildet sein. Durch ein solches Gehäuse wird die von dem Laufrad in Axialrichtung erzeugte Strömung effektiver. Das Gehäuse des Laufrades kann insbesondere an einem Gehäuse des Dichtungselements angeordnet oder mit diesem einstückig ausgebildet sein, wodurch eine besonders kompakte Bauform der Dichtungsanordnung erreicht wird.

Die erfindungsgemäße Dichtungsanordnung umfasst eine Axiwellendichtung.

Der Dichtring kann aus einer Vielzahl verschiedener Kunststoffmaterialien gebildet sein, besonders vorteilhaft sind jedoch thermoplastische Fluorpolymere oder Fluorelastomere, die sich durch eine hohe thermische und chemische Beständigkeit (z.B. gegen aggressive Medien) auszeichnen und einen geringen Reibungskoeffizienten aufweisen. Zusätzlich können verschleißmindernde Füllstoffe wie z.B. Molybdänsulfid oder Graphit zugesetzt werden. Geeignete thermoplastische Fluorpolymere sind sowohl PTFE, welches spanabhebend bearbeitet wird, als auch schmelzverarbeitbare TFE-Copolymere, wie z.B. PFA oder Moldflon®.

Bei dem genannten Typ der Radialwellendichtung ist ein Strömungserzeuger als Mittel zur Druckänderung bevorzugt auf Höhe des vorgewölbten Bereichs des Dichtrings angeordnet, und die in dem ersten Medium verursachte Strömung ist zu dem Dichtring hin orientiert. Dies stellt eine bevorzugte und zugleich einfache Ausgestaltung der Erfindung dar, bei der die mit der Drehzahl der Welle zunehmende Strömung zwischen die Dichtlippe und die Welle trifft und dadurch die Dichtlippe von der Welle weg drückt, so dass die Anpresskraft und die Reibung reduziert werden (jedoch nicht so stark, dass die Dichtungsanordnung undicht wird).

Die radiale Anpresskraft des Dichtrings auf die Welle wird günstigerweise durch eine Vorspannung des Dichtrings (z.B. in Form des Memory-Effektes bei PTFE), durch einen O-Ring aus einem Elastomermaterial, durch ein metallisches Federelement und/oder durch eine Druckdifferenz zwischen dem ersten und dem zweiten Medium bewirkt. Die Wirkungsweise des erfindungsgemäßen Strömungserzeugers ist jedoch unabhängig davon, auf welche Weise die Vorspannung erzeugt wird.

Bei einer besonderen Bauform von Radialwellendichtungen ist die Anpresskraft des Dichtrings an die Welle trotz einer Druckdifferenz zwischen dem ersten und dem zweiten Medium im Wesentlichen konstant, um zu hohe Pressungen bei hohen Drücken zu vermeiden. Zu diesem Zweck werden beide Seiten der Dichtlippe mit dem auf der Hochdruckseite herrschenden Druck beaufschlagt, wie dies z.B. in der Offenlegungsschrift DE 10 2011 077 015 A1 beschrieben ist.

Auch bei solchen druckentlasteten Radialwellendichtungen kann ein Strömungserzeuger als Mittel zur Druckänderung vorteilhaft eingesetzt werden. Die Dichtungsanordnung umfasst in diesem Fall einen in Richtung der Welle hermetisch geschlossenen Hohlraum, dessen Wandung zumindest teilweise durch ein elastisches Formteil gebildet wird, wobei der Hohlraum über mindestens einen Durchbruch mit dem ersten Medium beaufschlagbar ist, so dass der vorgewölbte Bereich des Dichtrings über das elastische Formteil an die Welle anpressbar ist.

Der Strömungserzeuger kann hier, wie bei einer einfachen Radialwellendichtung, auf Höhe des vorgewölbten Bereichs des Dichtrings angeordnet sein, wobei die erzeugte Strömung die Dichtlippe von der Welle wegdrückt, wie dies oben beschrieben wurde.

Gemäß einer alternativen Ausführungsform ist der Strömungserzeuger in diesem Fall auf Höhe des mindestens einen Durchbruchs angeordnet, und die in dem ersten Medium verursachte Strömung ist von dem Hohlraum weg orientiert. Durch die Strömung wird somit Medium aus dem Hohlraum "gesaugt", so dass der Druck in dem Hohlraum reduziert und die Dichtlippe durch den vergleichsweise höheren Druck im Bereich der Welle von dieser weg gedrückt wird. Umgekehrt kann hier durch eine Strömung in den Hohlraum die Anpresskraft erhöht werden.

Der vor dem Durchbruch angeordnete Strömungserzeuger hat den weiteren vorteilhaften Effekt, dass er plötzliche Druckstöße abmildert, bevor diese den Hohlraum erreichen.

Die Ausführungsformen der Erfindung betreffen Axialwellendichtungen. Bei dieser Bauform umgibt das Dichtungselement die Welle und liegt mit einer axialen Anpresskraft an einer zu der Welle senkrechten Gegenfläche an. Der Dichtspalt ist zwischen zwei Bauteilen gebildet, von denen das eine das Dichtungselement und das andere die Gegenfläche aufweist, wobei die Bauteile jeweils feststehend oder rotierend sein können.

Für das Kunststoffmaterial des Dichtungselements ist auch in diesem Fall ein thermoplastisches Fluorpolymer oder ein Fluorelastomer bevorzugt, wie bei dem Dichtring einer Radialwellendichtung.

Bei einer Axialwellendichtung ist es bevorzugt, wenn ein Strömungserzeuger als Mittel zur Druckänderung eine im Wesentlichen axiale Strömung in dem ersten Medium verursacht, die der Anpresskraft des Dichtungselements entgegen gerichtet ist. Hierzu kann der Strömungserzeuger (insbesondere ein Laufrad, wie oben beschrieben) in dem Dichtspalt zwischen dem Dichtungselement und der Gegenfläche angeordnet sein.

Besonders vorteilhaft ist es jedoch, wenn der Strömungserzeuger auf der dem Dichtungselement abgewandten Seite der Gegenfläche angeordnet ist, wobei die Gegenfläche einen oder mehrere Durchbrüche aufweist, durch die die Strömung hindurchtritt.

Bei einer bevorzugten Ausführungsform weist das Dichtungselement eine axiale Stirnfläche mit einem ringförmigen Vorsprung auf, der an der Gegenfläche anliegt. Alternativ kann das Dichtungselement im Wesentlichen schlauchförmig ausgebildet sein, wobei ein axialer Endbereich des Dichtungselements in Richtung der Welle vorgewölbt ist und an der Gegenfläche anliegt. Diese und weitere Gestaltungen von Axialwellendichtungen sind als solche aus dem Stand der Technik bekannt.

Die axiale Anpresskraft kann auf verschiedene Arten bewirkt werden, wobei dies von der Wirkungsweise der vorliegenden Erfindung wiederum unabhängig ist. Bevorzugt wird die axiale Anpresskraft durch ein metallisches Federelement, durch ein Federelement aus einem Kunststoffmaterial, insbesondere in Form eines Faltenbalgs, und/oder durch eine Vorspannung des Dichtungselements bewirkt.

Die erfindungsgemäße Dichtungsanordnung kann prinzipiell bei allen Anwendungen, bei denen eine Radial- oder Axialwellendichtung benötigt wird, zum Einsatz kommen. Besonders vorteilhaft ist der Einsatz der Erfindung bei Anwendungen mit sehr hohen Drehzahlen, wie z.B. bei Zentrifugen, oder bei Turboladern für Verbrennungsmotoren.

Diese und weitere Vorteile der Erfindung werden anhand der nachfolgenden Ausführungsbeispiele unter Bezugnahme auf die Figuren näher erläutert.

Es zeigen im Einzelnen:
- Figur 1:: ein erstes Referenzbeispiel einer Dichtungsanordnung als Radialwellendichtung;
- Figur 2:: ein zweites Referenzbeispiel einer Dichtungsanordnung als Radialwellendichtung;
- Figur 3:: ein drittes Referenzbeispiel einer Dichtungsanordnung als Radialwellendichtung;
- Figur 4:: ein viertes Referenzbeispiel einer Dichtungsanordnung als druckentlastete Radialwellendichtung;
- Figur 5:: ein fünftes Referenzbeispiel einer Dichtungsanordnung als druckentlastete Radialwellendichtung;
- Figur 6:: ein sechstes Ausführungsbeispiel einer erfindungsgemäßen Dichtungsanordnung als Axialwellendichtung;
- Figur 7:: ein siebtes Ausführungsbeispiel einer erfindungsgemäßen Dichtungsanordnung als Axialwellendichtung;
- Figur 8:: ein achtes Ausführungsbeispiel einer erfindungsgemäßen Dichtungsanordnung als Axialwellendichtung; und
- Figur 9:: eine schematische Darstellung verschiedener Varianten der Dichtungsanordnung.

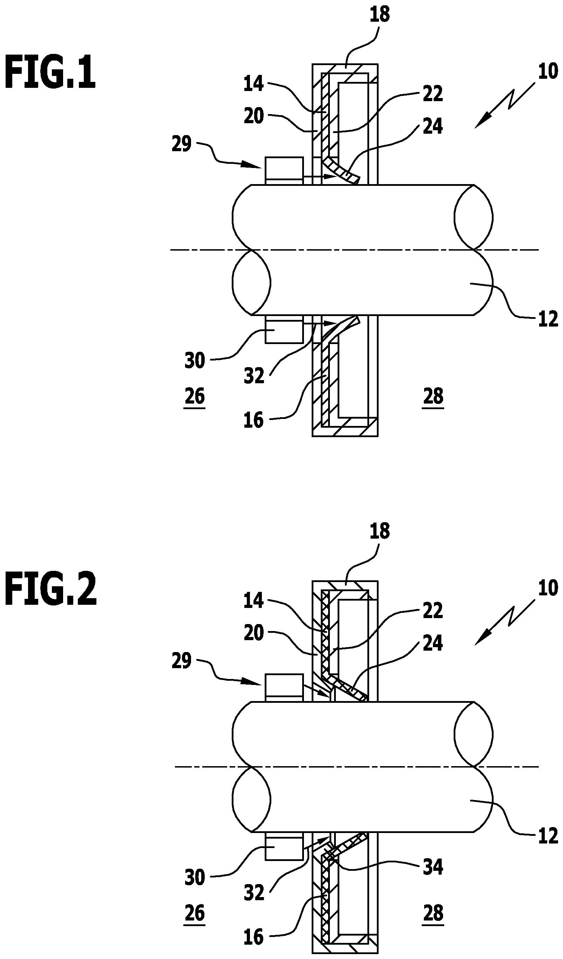

In den Figuren 1 bis 8 sind verschiedene Referenz- und Ausführungsbeispiele der Dichtungsanordnung dargestellt, bei denen die Mittel, die eine Verringerung oder Erhöhung der Anpresskraft des Dichtungselements durch eine gezielte Druckänderung in dem ersten Medium bewirken, einen drehfest mit der Welle verbundenen Strömungserzeuger umfassen. Es wird jeweils der Fall einer Verringerung der Anpresskraft mit steigender Drehzahl beschrieben, wobei sich durch eine Umkehrung der Strömungsrichtung auch der gegenteilige Effekt erzeugen lässt.

Die Figur 1 zeigt ein erstes Referenzbeispiel einer nicht beanspruchten Dichtungsanordnung 10, und zwar in einer Längsschnittdarstellung durch die Welle 12. Die Dichtungsanordnung 10 ist in diesem Fall als Radialwellendichtung ausgebildet und umfasst als Dichtungselement 14 einen Dichtring 16 aus einem Kunststoffmaterial, der die Welle 12 rotationssymmetrisch umgibt.

Der äußere und mittlere Bereich des Dichtrings 16 ist in einem Dichtungsgehäuse 18 angeordnet und wird an dessen axialer Stirnseite 20 durch ein Klemmelement 22 kraftschlüssig gehalten. Der innere Bereich des Dichtrings 16 ist in Axialrichtung vorgewölbt und bildet eine Dichtlippe 24, die mit einer radialen Anpresskraft an der Welle 12 anliegt. Die Anpresskraft wird bei diesem Ausführungsbeispiel zumindest teilweise durch die Vorspannung des Dichtrings 16 bewirkt, wobei alternativ oder zusätzlich auch ein O-Ring aus einem Elastomermaterial oder ein metallisches Federelement vorgesehen sein können, in Abhängigkeit vom konkreten Material des Dichtrings 16.

Das Dichtungselement 14 in Form des Dichtrings 16 kann aus verschiedenen Arten von Kunststoffmaterialien gebildet sein, die in Abhängigkeit von den Einsatzbedingungen der Dichtungsanordnung 10 ausgewählt werden können. Besonders vorteilhaft ist in vielen Fällen die Verwendung von thermoplastischen Fluorpolymeren, wie z.B. PTFE oder schmelzverarbeitbare TFE-Copolymere (z.B. Moldflon®), die sich durch eine hohe thermische und chemische Beständigkeit sowie einen niedrigen Reibungskoeffizienten auszeichnen. Alternativ können z.B. auch Fluorelastomere eingesetzt werden.

Bei der Dichtungsanordnung 10 bewirkt das Dichtungselement 14 eine Abdichtung zwischen einem ersten Medium 26 und einem zweiten Medium 28, wobei die Dichtlippe 24 in Richtung des zweiten Mediums 28 vorgewölbt ist.

Die Medien 26 und 28 können jeweils gasförmig oder flüssig sein, wobei zwischen den Medien ein Druckunterschied bestehen kann. In diesem Fall bildet günstigerweise das erste Medium 26 die Niederdruckseite und das zweite Medium 28 die Hochdruckseite, so dass mit steigender Druckdifferenz die Pressung der Dichtlippe 24 an die Welle 12 erhöht und die Dichtigkeit der Dichtungsanordnung 10 verbessert wird.

Die Dichtungsanordnung 10 umfasst des Weiteren Mittel 29 zur gezielten Druckänderung in dem ersten Medium 26, nämlich einen Strömungserzeuger in Form eines Laufrades 30, welches im Bereich des ersten Mediums 26 angeordnet und drehfest mit der Welle 12 verbunden ist. Das Laufrad 30, welches in der Figur 1 nur schematisch dargestellt ist, ist insbesondere als Propeller, Flügelrad, Schaufelrad oder Fächerscheibe ausgebildet und auf Höhe der Dichtlippe 24 des Dichtrings 16 so angeordnet, dass es eine mit der Rotationsgeschwindigkeit der Welle 12 zunehmende Strömung 32 in dem ersten Medium 26 verursacht. Diese Strömung 32, die im Wesentlichen parallel zur Welle 12 orientiert ist, drückt die Dichtlippe 24 von der Welle 12 weg und hat somit die vorteilhafte Wirkung, dass die Anpresskraft der Dichtlippe 24 an die Welle 12 mit zunehmender Drehzahl der Welle 12 abnimmt, so dass eine zu starke Entwicklung von Reibungswärme vermieden wird.

Die konkrete Geometrie des Flügelrades 30, welches aus Metall oder einem Kunststoffmaterial gebildet ist, kann in Abhängigkeit von den jeweiligen Rahmenbedingungen, insbesondere der Art der Medien 26 und 28 und den Eigenschaften des Dichtrings 16, so ausgebildet werden, dass eine optimale drehzahlabhängige Reduktion der Anpresskraft erreicht wird.

Weitere Vorteile, die durch den Strömungserzeuger 30 erzielt werden, sind eine aktive Kühlung im Bereich der Dichtlippe 24 sowie eine Entfernung von Staub- oder Schmutzpartikeln. Dies gilt sowohl für flüssige wie auch gasförmige erste Medien 26, in denen die Strömung 32 erzeugt wird. In einem bevorzugten Anwendungsfall, wenn das erste Medium 26 gasförmig ist (z.B. Umgebungsluft) und das zweite Medium 28 flüssig (z.B. Motor- oder Getriebeöl), ergibt sich der weitere Vorteil, dass unter der Dichtlippe 24 hindurchtretendes Medium 28 (Leckagefluid) durch die Strömung 32 zurückgedrängt werden kann.

Die Figur 2 zeigt ein zweites Referenzbeispiel einer nicht beanspruchten Dichtungsanordnung 10, die bis auf das nachfolgend beschriebene Detail dem ersten Ausführungsbeispiel entspricht. Gleiche oder einander entsprechende Elemente sind jeweils mit demselben Bezugszeichen bezeichnet wie in der Figur 1.

Bei der Dichtungsanordnung 10 gemäß Figur 2 knickt der Innenrand der axialen Stirnseite 20 des Dichtungsgehäuses 18 in Richtung des zweiten Mediums 28 ab und bildet ein Stützelement 34 für einen Teilbereich der Dichtlippe 24. Neben dieser Stützfunktion hat das Stützelement 34 auch den Effekt, dass sich der Querschnitt der von dem Laufrad 30 erzeugten Strömung 32 verjüngt, so dass die Strömung 32 noch effektiver zwischen die Welle 12 und die Dichtlippe 24 geleitet werden kann.

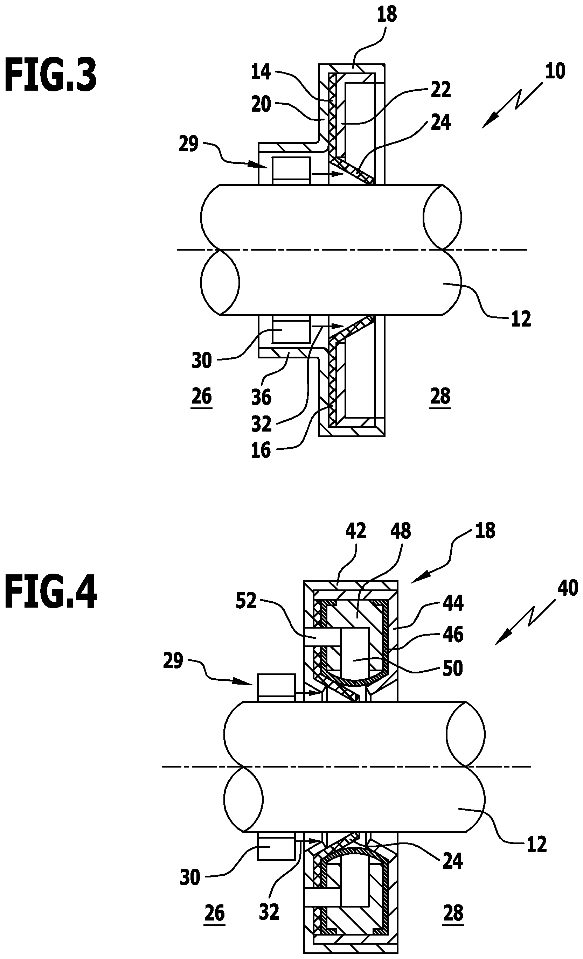

Ein drittes Referenzbeispiel einer nicht beanspruchten Dichtungsanordnung 10, das in der Figur 3 dargestellt ist, entspricht ebenfalls im Wesentlichen dem ersten Ausführungsbeispiel der Figur 1, mit dem Unterschied, dass der Strömungserzeuger in diesem Fall ein Gehäuse 36 umfasst, welches das Laufrad 30 entlang dessen Umfang umgibt. Das Gehäuse 36 ist einstückig mit dem Dichtungsgehäuse 18 ausgebildet und schließt unmittelbar an die axiale Stirnseite 20 des Dichtungsgehäuses 18 an.

Durch das Gehäuse 36 kann die Effektivität der von dem Laufrad 30 erzeugten Strömung 32 in Axialrichtung weiter verbessert werden. Durch das gemeinsame Gehäuse, welches aus Metall oder einem Kunststoffmaterial gebildet sein kann, wird auch eine sehr kompakte Bauform der Dichtungsanordnung 10 erreicht.

Die Figur 4 zeigt ein viertes Referenzbeispiel einer nicht beanspruchten Dichtungsanordnung, die als Ganzes mit 40 bezeichnet ist. Bei der Dichtungsanordnung 40 handelt es sich ebenfalls um eine Radialwellendichtung, jedoch mit einer vorteilhaften Art der Druckentlastung, wie sie z.B. in der Offenlegungsschrift DE 10 2011 077 015 A1 beschrieben ist.

Bei der Dichtungsanordnung 40 umfasst das Dichtungsgehäuse 18 ein erstes Gehäuseteil 42 und ein zweites Gehäuseteil 44, zwischen denen das Dichtungselement 14 in Form des Dichtrings 16, ein elastisches Formteil 46 mit einem in etwa U-förmigen Querschnittsprofil sowie ein Distanzring 48 kraftschlüssig gehalten sind. Innerhalb des elastischen Formteils 46 ist ein in Richtung der Welle 12 hermetisch geschlossener Hohlraum 50 ausgebildet, der über einen Durchbruch 52 mit dem ersten Medium 26 beaufschlagbar ist.

Bei dieser Ausgestaltung befindet sich das erste Medium 26 auf der Hochdruckseite, wobei die Anpresskraft der Dichtlippe 24 an die Welle 12 von der Druckdifferenz zwischen den beiden Medien 26 und 28 im Wesentlichen unabhängig ist, da der Druck des ersten Mediums 26 von beiden Seiten auf die Dichtlippe 24 wirken kann.

Die Anordnung und Wirkungsweise des Laufrades 30 ist hier dieselbe wie bei den ersten drei Ausführungsbeispielen, d.h. es wird eine Strömung 32 auf Höhe der Dichtlippe 24 in deren Richtung erzeugt, so dass mit zunehmender Rotationsgeschwindigkeit der Welle 12 die Dichtlippe 24 von der Welle 12 weggedrückt wird.

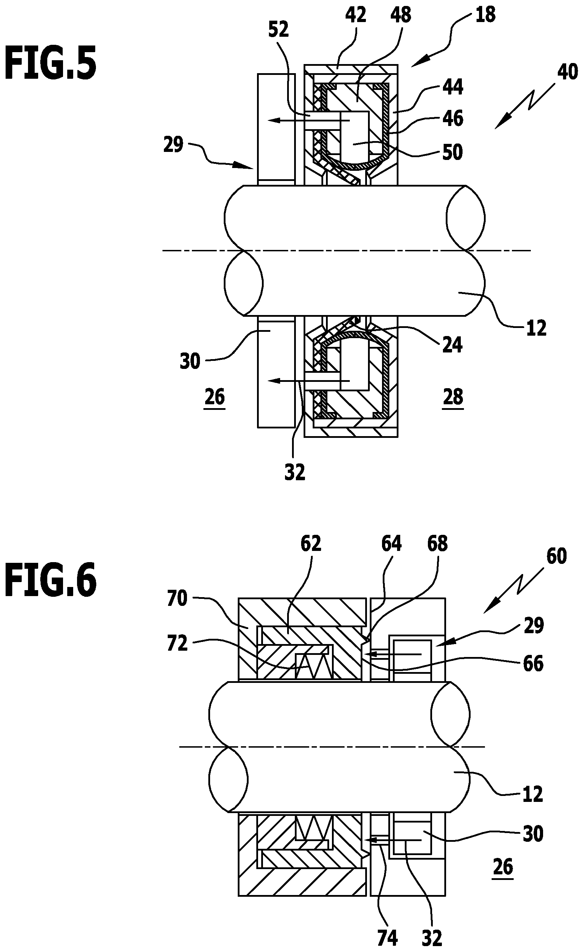

Eine alternative Anordnung bzw. Gestaltung des Laufrades 30 ist in dem fünften Referenzbeispiel einer nicht beanspruchten Dichtungsanordnung 40 in der Figur 5 dargestellt, wobei der Aufbau der druckentlasteten Radialwellendichtung im Übrigen exakt der Figur 4 entspricht. Das Laufrad 30 hat bei dieser Variante allerdings einen größeren Durchmesser und ist so gestaltet, dass es eine Strömung in dem ersten Medium 26 auf Höhe des Durchbruchs 52 erzeugt, welche von dem Hohlraum 50 weg orientiert ist. Die Strömung 32 verursacht somit eine Erniedrigung des Drucks in dem Hohlraum 50, so dass die über das elastische Formteil 46 vermittelte Anpresskraft auf die Dichtlippe 24 reduziert wird. Dies hat letztlich denselben Effekt wie bei dem vierten Ausführungsbeispiel, dass die Dichtlippe 24 mit zunehmender Drehzahl durch das erste Medium 26 von der Welle 12 weg gedrückt wird.

Die Figur 6 zeigt ein sechstes Ausführungsbeispiel einer erfindungsgemäßen Dichtungsanordnung, die als Ganzes mit 60 bezeichnet ist. Bei der Dichtungsanordnung 60 handelt es sich im Unterschied zu den ersten fünf Ausführungsbeispielen eine Axialwellendichtung, bei der das Dichtungselement 62 an einer zu der Welle 12 senkrechten Gegenfläche 64 anliegt. Dabei weist das Dichtungselement 62 eine axiale Stirnfläche 66 mit einem ringförmigen Vorsprung 68 auf, welcher kreislinienförmig an der Gegenfläche 64 anliegt.

Das Dichtungselement 62 ist in einem Dichtungsgehäuse 70 angeordnet. Die Anpresskraft des Dichtungselements 62 an die Gegenfläche 64 wird durch ein metallisches Federelement 72 bewirkt, welches sich an dem Dichtungsgehäuse 70 abstützt. Das Dichtungselement 62 ist auch hier aus einem Kunststoffmaterial gebildet.

Der erfindungsgemäß vorgesehene Strömungserzeuger in Form eines Laufrades 30 ist auch bei dieser Axialwellendichtung grundsätzlich so ausgebildet wie bei den Radialwellendichtungen gemäß den ersten fünf Ausführungsbeispielen, d.h. insbesondere als Propeller, Flügelrad, Schaufelrad oder Fächerscheibe, so dass eine im Wesentlichen parallel zu der Welle 12 orientierte Strömung 32 in dem ersten Medium 26 erzeugt wird. Das Laufrad 30 ist in diesem Fall auf der dem Dichtungselement 62 abgewandten Seite der Gegenfläche 64 angeordnet, wobei die Gegenfläche 64 einen oder mehrere Durchbrüche 74 aufweist, durch die die Strömung 32 hindurchtritt. Die Strömung 32 bewirkt somit eine Kraft auf die Stirnfläche 66 des Dichtungselements 62, welche der Anpresskraft des Federelement 72 direkt entgegengerichtet ist, so dass auch hier die Anpresskraft der Dichtung 62 an die Gegenfläche 64 mit zunehmender Rotationsgeschwindigkeit der Welle 12 abnimmt.

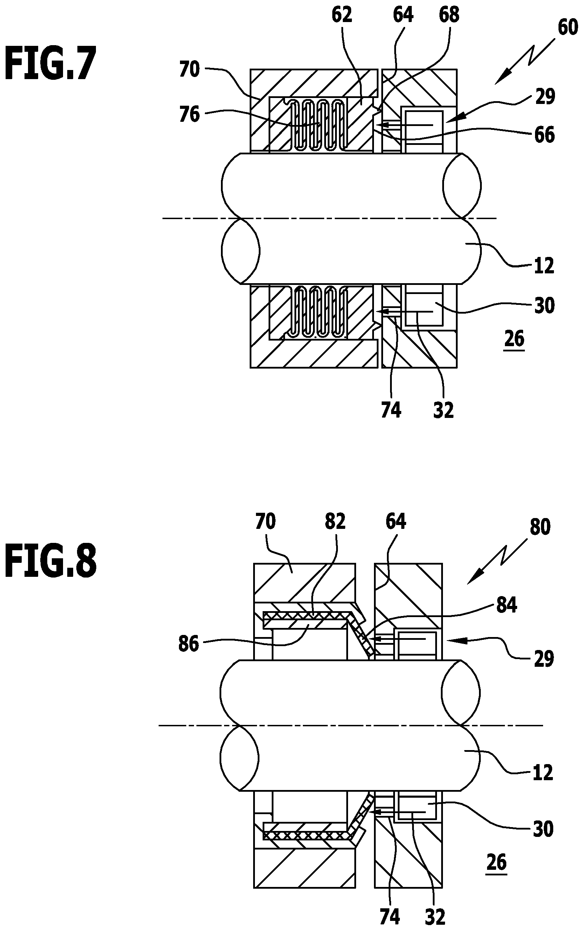

Ein siebtes Ausführungsbeispiel der Dichtungsanordnung 60 ist in der Figur 7 dargestellt. Dieses entspricht bis auf die nachfolgend beschriebene Abwandlung dem sechsten Ausführungsbeispiel gemäß der Figur 6, wobei gleiche oder einander entsprechende Elemente jeweils mit demselben Bezugszeichen bezeichnet sind.

Bei der Variante gemäß der Figur 7 wird die Anpresskraft des Dichtungselements 62 an die Gegenfläche 64 nicht durch ein metallisches Federelement bewirkt, sondern durch ein Federelement aus einem Kunststoffmaterial in Form eines Faltenbalgs 76. Der Faltenbalg 76 ist einstückig mit dem Dichtungselement 62 ausgebildet und stützt sich an dem Dichtungsgehäuse 70 ab.

Die Figur 8 zeigt ein achtes Ausführungsbeispiel einer erfindungsgemäßen Dichtungsanordnung, die als Ganzes mit 80 bezeichnet ist. Bei der Dichtungsanordnung 80 handelt es sich ebenfalls um eine Axialwellendichtung ähnlich dem sechsten und siebten Ausführungsbeispiel, allerdings ist hier das Dichtungselement 86 im Wesentlichen schlauchförmig ausgebildet, wobei ein axialer Endbereich des Dichtungselements 82 eine Dichtlippe 84 bildet, die in Richtung der Welle 12 vorgewölbt ist und an der Gegenfläche 64 anliegt. Das Dichtungselement 82 wird in dem Dichtungsgehäuse 70 durch ein Klemmelement 82 kraftschlüssig gehalten.

Die Anpresskraft der Dichtlippe 84 auf die Gegenfläche 64 wird in diesem Fall durch eine Vorspannung des Dichtungselements 82 bewirkt. Das Laufrad 30 ist wie bei den Ausführungsbeispielen der Figuren 6 und 7 auf der dem Dichtungselement 82 abgewandten Seite der Gegenfläche 64 angeordnet und verursacht eine Strömung 30, die die Dichtlippe 84 von der Gegenfläche 64 wegdrückt.

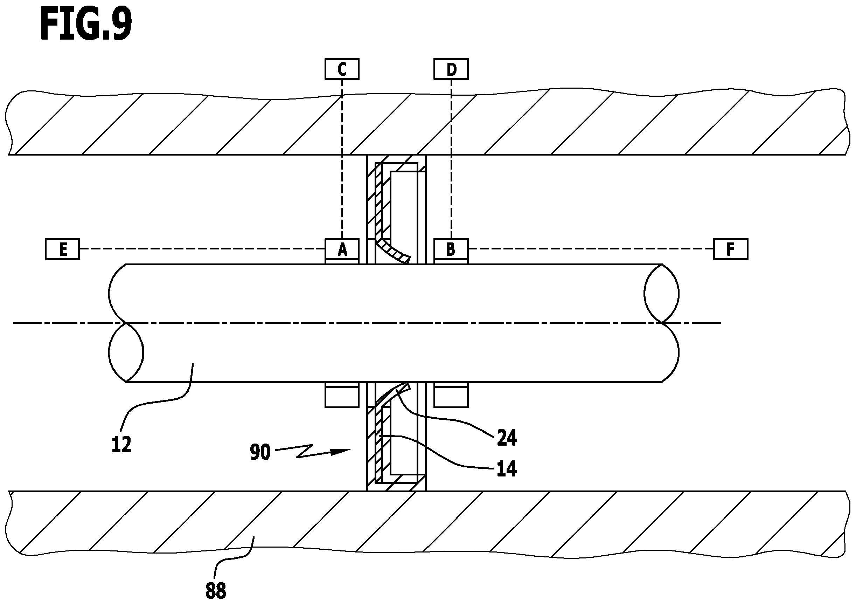

Die Figur 9 dient zur schematischen Darstellung von verschiedenen Arten und Positionen von Mitteln zur Druckänderung, und zwar am Beispiel einer Radialwellendichtung 90, die der in Figur 1 dargestellten Dichtungsanordnung 10 entspricht. Neben der Dichtungsanordnung 90 und der Welle 12 ist hier auch ein feststehendes Bauteil 88 dargestellt, in dem die Welle 12 aufgenommen ist.

Sechs verschiedene Möglichkeiten, wie und wo die Mittel zur Druckänderung angeordnet sein können, sind mit den Buchstaben A bis F bezeichnet. Bei den Positionen A, C und E erfolgt die Druckänderung in demjenigen Medium, von dem die Dichtlippe 24 weg orientiert ist, und bei den Positionen B, D und F in demjenigen Medium, zu dem die Dichtlippe 24 hin orientiert ist. Das Medium mit der Druckänderung ist definitionsgemäß immer das erste Medium.

Die Positionen A und B repräsentieren Mittel zur lokalen Druckänderung im Bereich des Dichtungselements 14, d.h. insbesondere Strömungserzeuger wie bei der Dichtungsanordnung 10 gemäß der Figur 1. Je nachdem, ob die erzeugte Strömung zu dem Dichtungselement 14 hin oder von diesem weg orientiert ist, kann sowohl in der Position A wie auch in der Position B entweder eine Verringerung oder eine Erhöhung der Anpresskraft der Dichtlippe 24 mit zunehmender Rotationsgeschwindigkeit der Welle 12 bewirkt werden.

Die Positionen E und F repräsentieren Mittel zur Änderung des Drucks in dem gesamten ersten Medium, wobei die Mittel in dem Medium selbst, also intern, angeordnet sind. Die Wirkung der Mittel E und F auch im Bereich des Dichtungselements 14 ist durch gestrichelte Linien angedeutet.

Die Positionen C und D repräsentieren Mittel zur Druckänderung, die außerhalb des ersten Mediums, also extern, angeordnet sind. Hierbei kann es sich insbesondere um Regelventile handeln, über die das erste Medium mit einem externen Druck beaufschlagt wird.

**Bezugszeichenliste**

| | | | |
|---|---|---|---|
| 10 | Dichtungsanordnung | 80 | Dichtungsanordnung |
| 12 | Welle | 82 | Dichtungselement |
| 14 | Dichtungselement | 84 | Dichtlippe |
| 16 | Dichtring | 86 | Klemmelement |
| 18 | Dichtungsgehäuse | 88 | feststehendes Bauteil |
| 20 | axiale Stirnseite | 90 | Dichtungsanordnung |
| 22 | Klemmelement | | |
| 24 | Dichtlippe | | |
| 26 | erstes Medium | | |
| 28 | zweites Medium | | |
| 29 | Mittel zur Druckänderung | | |
| 30 | Laufrad | | |
| 32 | Strömung | | |
| 34 | Stützelement | | |
| 36 | Gehäuse | | |
| 40 | Dichtungsanordnung | | |
| 42 | erstes Gehäuseteil | | |
| 44 | zweites Gehäuseteil | | |
| 46 | elastisches Formteil | | |
| 48 | Distanzring | | |
| 50 | Hohlraum | | |
| 52 | Durchbruch | | |
| 60 | Dichtungsanordnung | | |
| 62 | Dichtungselement | | |
| 64 | Gegenfläche | | |
| 66 | axiale Stirnfläche | | |
| 68 | ringförmiger Vorsprung | | |
| 70 | Dichtungsgehäuse | | |
| 72 | metallisches Federelement | | |
| 74 | Durchbrüche | | |
| 76 | Faltenbalg | | |

## Patentansprüche

1. Dichtungsanordnung (60; 80) zur Abdichtung zwischen einem ersten und einem zweiten Medium (26; 28) im Bereich einer Welle (12), umfassend ein Dichtungselement (62; 82) aus einem Kunststoffmaterial,
- wobei die Dichtungsanordnung (60; 80) Mittel (29) umfasst, die lediglich lokal im Bereich des Dichtungselements (62; 82) eine Verringerung oder Erhöhung der Anpresskraft des Dichtungselements (62; 82) durch eine gezielte Druckänderung in dem ersten Medium (26) bewirken,
- wobei die Mittel (29) einen drehfest mit der Welle (12) verbundenen Strömungserzeuger (30) umfassen, der so ausgebildet ist, dass er eine mit der Rotationsgeschwindigkeit der Welle (12) zunehmende Strömung (32) in dem ersten Medium (26) verursacht, wobei die Strömung (32) im Wesentlichen parallel zu der Welle (12) orientiert ist, und
- wobei der Strömungserzeuger ein konzentrisch um die Welle (12) angeordnetes Laufrad (30) umfasst,
**dadurch gekennzeichnet, dass** ein Gehäuse (36) das Laufrad (30) entlang dessen Umfang umgibt, das Dichtungselement (62; 82) die Welle (12) umgibt und mit einer axialen Anpresskraft an einer zu der Welle (12) senkrechten Gegenfläche (64) anliegt, wobei die Strömung (32) eine Verringerung oder Erhöhung der Anpresskraft des Dichtungselements (62; 82) auf die senkrechte Gegenfläche (64) bewirkt.

2. Dichtungsanordnung (60; 80) nach Anspruch 1, wobei das Laufrad (30) als Propeller, Flügelrad, Schaufelrad oder Fächerscheibe ausgebildet ist.

3. Dichtungsanordnung (60; 80) nach Anspruch 1 oder 2, wobei der Strömungserzeuger (30) eine im Wesentlichen axiale Strömung (32) in dem ersten Medium (26) verursacht, die der Anpresskraft des Dichtungselements (62; 82) entgegen gerichtet ist.

4. Dichtungsanordnung (60; 80) nach einem der Ansprüche 1 bis 3, wobei der Strömungserzeuger (30) auf der dem Dichtungselement (62; 82) abgewandten Seite der Gegenfläche (64) angeordnet ist, und wobei die Gegenfläche (64) einen oder mehrere Durchbrüche (74) aufweist, durch die die Strömung (32) hindurchtritt.

5. Dichtungsanordnung (60) nach einem der Ansprüche 1 bis 4, wobei das Dichtungselement (62) eine axiale Stirnfläche (66) mit einem ringförmigen Vorsprung (68) aufweist, der an der Gegenfläche (64) anliegt; oder wobei das Dichtungselement (82) im Wesentlichen schlauchförmig ausgebildet ist, und wobei ein axialer Endbereich (84) des Dichtungselements (82) in Richtung der Welle (12) vorgewölbt ist und an der Gegenfläche (64) anliegt.

6. Dichtungsanordnung (60; 80) nach einem der Ansprüche 1 bis 5, wobei die axiale Anpresskraft durch ein metallisches Federelement (72), durch ein Federelement aus einem Kunststoffmaterial, insbesondere in Form eines Faltenbalgs (76), und/oder durch eine Vorspannung des Dichtungselements (62; 82) bewirkt wird.

## Claims

1. Sealing arrangement (60; 80) for sealing between a first and a second medium (26; 28) within the range of a shaft (12), comprising a sealing element (62; 82) made of a plastics material,
- wherein the sealing arrangement (60; 80) comprises means (29) which cause, only locally within the range of the sealing element (62; 82), a decrease or an increase of the contact force of the sealing element (62; 82) by means of a selective pressure change in the first medium (26),
- wherein the means (29) comprise a flow generator (30) in a torque proof connection with the shaft (12), being configured to cause a flow (32) in the first medium (26) increasing with the rotation speed of the shaft (12), wherein the flow (32) is directed substantially parallel to the shaft (12), and
- wherein the flow generator is a rotor (30) arranged concentrically around the shaft (12),
**characterized in that** a housing (36) encloses the rotor (30) along its circumference, the sealing element (62; 82) encloses the shaft (12) and abuts against a counterface (64) perpendicular to the shaft (12) with an axial contact force, wherein the flow (32) causes a decrease or an increase of the contact force of the sealing element (62; 82) onto the perpendicular counterface (64).

2. Sealing arrangement (60; 80) according to claim 1, wherein the rotor (30) is configured as a propeller, a winged wheel, a paddle wheel or a fan disc.

3. Sealing arrangement (60; 80) according to claim 1 or 2, wherein the flow generator (30) causes a substantially axial flow (32) in the first medium (26), which is directed opposite to the contact force of the sealing element (62; 82).

4. Sealing arrangement (60; 80) according to any one of claims 1 to 3, wherein the flow generator (30) is arranged on the far side of the counterface (64) relative to the sealing element (62; 82), and wherein the counterface (64) has one or more perforations (74) through which the flow (32) passes.

5. Sealing arrangement (60) according to any one of claims 1 to 4, wherein the sealing element (62) has an axial end face (66) with a ringshaped protrusion (68) which abuts against the counterface (64); or wherein the sealing element (82) has a substantially tubular shape, and wherein an axial end portion (84) of the sealing element (82) is bulged out towards the shaft (12) and abuts against the counterface (64).

6. Sealing arrangement (60; 80) according to any one of claims 1 to 5, wherein the axial contact force is caused by a metallic spring element (72), by a spring element of a plastics material, in particular in the form of a bellows (76), and/or by a pretension of the sealing element (62; 82).

## Revendications

1. Agencement d'étanchéité (60 ; 80) pour assurer l'étanchéité entre un premier et un deuxième fluide (26 ; 28) au niveau d'un arbre (12), comprenant un élément d'étanchéité (62 ; 82) en une matière plastique,
- dans lequel l'agencement d'étanchéité (60 ; 80) comprend des moyens (29) qui entraînent, uniquement localement au niveau de l'élément d'étanchéité (62 ; 82), une réduction ou une augmentation de la force de pression de l'élément d'étanchéité (62 ; 82) en modifiant de manière ciblée la pression dans le premier fluide (26),
- dans lequel les moyens (29) comprennent un générateur d'écoulement (30), en liaison fixe en rotation avec l'arbre (12) et configuré de manière à provoquer un écoulement (32), augmentant avec la vitesse de rotation de l'arbre (12), dans le premier fluide (26), l'écoulement (32) étant orienté de manière essentiellement parallèle à l'arbre (12), et
- dans lequel le générateur d'écoulement comprend une roue (30) disposée concentriquement autour de l'arbre (12),
**caractérisé en ce qu'**un boîtier (36) entoure la roue (30) le long de sa circonférence, l'élément d'étanchéité (62 ; 82) entoure l'arbre (12) et plaque contre une face de réaction (64) perpendiculaire à l'arbre (12) avec une force de pression axiale, l'écoulement (32) provoquant une réduction ou une augmentation de la force de pression de l'élément d'étanchéité (62 ; 82) sur la face de réaction (64) perpendiculaire.

2. Aménagement d'étanchéité (60 ; 80) selon la revendication 1, dans lequel la roue (30) est conçue comme une hélice, une roue à ailettes, une roue à pales ou une rondelle éventail.

3. Aménagement d'étanchéité (60 ; 80) selon la revendication 1 ou la revendication 2, dans lequel le générateur d'écoulement (30) provoque un écoulement essentiellement axial (32) dans le premier fluide (26) dirigé dans le sens opposé à la force de pression de l'élément d'étanchéité (62 ; 82).

4. Aménagement d'étanchéité (60 ; 80) selon l'une quelconque des revendications 1 à 3, dans lequel le générateur d'écoulement (30) est disposé sur le côté de la face de réaction (64) opposé à l'élément d'étanchéité (62 ; 82), et la face de réaction (64) présente une ou plusieurs traversées (74) par la/lesquelles passe l'écoulement (32).

5. Aménagement d'étanchéité (60) selon l'une quelconque des revendications 1 à 4, dans lequel l'élément d'étanchéité (62) présente une face avant axiale (66) dotée d'une saillie annulaire (68) qui plaque contre la face de réaction (64) ; ou dans lequel l'élément d'étanchéité (82) est essentiellement en forme de tuyau et une zone d'extrémité axiale (84) de l'élément d'étanchéité (82) est pré-cintrée dans le sens de l'arbre (12) et plaque contre la face de réaction (64).

6. Aménagement d'étanchéité (60 ; 80) selon l'une quelconque des revendications 1 à 5, dans lequel la force de pression axiale est générée par un élément de ressort métallique (72), par un élément de ressort fabriqué dans une matière plastique, en particulier ayant une forme de soufflet (76), et/ou par une précontrainte de l'élément d'étanchéité (62 ; 82).
